# EUROPEAN PATENT SPECIFICATION

(11) **EP 3 982 451 B1**
(45) Date of publication and mention of the grant of the patent: **02.04.2025**
(21) Application number: 21199891.9
(22) Date of filing: 29.09.2021
(51) Int. Cl.: H01M 10/052, H01M 10/0585, H01M 10/0562, H01M 50/491, H01M 50/474, H01M 50/486

(54) **ALL SOLID BATTERY**
FESTKÖRPERBATTERIE
BATTERIE ENTIÈREMENT SOLIDE

(30) Priority: 12.10.2020 KR 20200131333
(43) Date of publication of application: 13.04.2022
(73) Proprietor: Samsung SDI Co., Ltd., Yongin-si, Gyeonggi-do 17084 (KR)
(72) Inventor: Choi, Bokkyu, 17084 Yongin-si, Gyeonggi-do (KR); Ryu, Young Gyoon, 17084 Yongin-si, Gyeonggi-do (KR); Yoon, Jaegu, 17084 Yongin-si, Gyeonggi-do (KR); Lee, Eungyeong, 17084 Yongin-si, Gyeonggi-do (KR); Lee, Joowook, 17084 Yongin-si, Gyeonggi-do (KR)
(74) Representative: Gulde & Partner

(56) References cited:
- WO-A1-2020/116090
- US-A1- 2004 185 336
- US-A1- 2021 296 736

## Description

### BACKGROUND OF THE INVENTION

### (a) Field of the Invention

This relates to an all solid battery. More particularly, this relates to all solid battery accommodating a cell stack in a case.

### (b) Description of the Related Art

All solid battery includes a cell stack including a positive electrode, a negative electrode and a solid electrolyte layer interposed between the positive electrode and the negative electrode. In the all solid battery, the solid electrolyte acts as a medium conducting lithium ions.

In case of a sulfide all solid battery using deposition and stripping reactions of lithium, a cell stack may be expended and shrunk due to the expansion and shrinkage of a negative electrode. It is required to pressurize in order to absorb such a volume change as well as a close contact of the negative electrode, the solid electrolyte layer and the positive electrode.

Thus, buffer materials may be applied. When a prismatic all solid battery is fabricated, a cell stack with the buffer material should be inserted into a case in which one side of the rectangular is opened, under the pressurizing.

However, a thickness of the cell stack with the buffer material before pressurizing is larger than a distance between interior walls of the case, and thus it is difficult to insert the cell stack into the case.

WO 2020/116090 A1 discloses an all solid battery including an insulating layer between adjacent battery units. US 2004/185336 A1 discloses an all solid battery including a buffer layers disposed on the surfaces of current collectors.

The above information disclosed in this Background section is only for enhancement of understanding of the background of the invention, and therefore it may contain information that does not form the prior art that is already known in this country to a person of ordinary skill in the art.

### SUMMARY OF THE INVENTION

One embodiment provides an all solid battery in which a negative electrode, a positive electrode, and a solid electrolyte layer are closely contacted by continuously pressurizing a cell stack in an insertion state and in which the cell stack is easily inserted into the case by changing a thickness of the cell stack, before and after inserting the cell stack with a buffer material into the case.

Another embodiment provides an all solid secondary battery in which a thickness of a cell stack is changed before and after inserting the cell stack into the case, by using a thermo-responsive polymer porous sheet. Still another embodiment provides an all solid battery in which a negative electrode, a positive electrode, and a solid electrolyte layer are closely contacted by increasing a temperature of a cell stack including a thermo-responsive polymer sheet causing a volume phase transition at a critical temperature at more than or equal to the critical temperature, before inserting it into a case, to make a smaller total thickness of the cell stack than a distance between interior walls of the case due to the shrinkage of the porous sheet, and by decreasing the temperature to less than the critical temperature to expand the thickness of the cell stack by expanding the polymer porous sheet.

The present invention refers to an all solid battery as defined in claim 1 and includes a cell stack including a negative electrode, a solid electrolyte layer, and a positive electrode, a case accommodating the cell stack, and a buffer material layer pressurizing the cell stack in the case.

The buffer material layer is a thermo-responsive polymer porous sheet.

The buffer material layer is a thermo-responsive polymer with a critical temperature (lower critical solution temperature, LCST) of about 50 °C to about 80 °C. The thermo-responsive polymer is selected from poly(N-ethylmethacrylamide), poly(propylene glycol), poly(N-cyclopropylacrylamide), or a combination thereof.

The buffer material layer may be interposed between the cell stack and the case.

The negative electrode may include a negative current collector and a negative active material layer formed on one side or both sides of the negative current collector, and the positive electrode may include a positive current collector and a positive active material layer formed on one side or both sides of the positive current collector. The solid electrolyte layer may be interposed between the negative active material layer and the positive active material layer, and the buffer material layer may be interposed between an outmost current collector of the negative current collector and the positive current collector, and the inside of the case.

Alternatively, the negative electrode may include a negative current collector and a negative active material layer formed on one side of the negative current collector, and the positive electrode may include a positive current collector and a positive active material layer formed on both sides of the positive current collector. The solid electrolyte layer may be interposed between the negative active material layer and the positive active material layer, and the buffer material layer may be interposed between opposite sides of the negative active material layer of the two adjacent negative current collectors.

The buffer material layer may be disposed between the outmost negative current collector and the inside of the case.

The all solid battery according to one embodiment exhibits improved workability of inserting the cell stack into the case, as the cell stack is shrunk and expanded owing to the thickness changing of the buffer material layer, that is, the thermo-responsive polymer porous sheet, depending on the temperature variation, and the all solid battery allows close contact between the negative electrode, the positive electrode, and the solid electrolyte layer in an insertion state.

### BRIEF DESCRIPTION OF THE DRAWINGS

FIG. 1 is a cross-sectional view of the all solid battery according to a first embodiment.
FIG. 2 is a cross-sectional view of the all solid battery according to a second embodiment.
FIG. 3 is a graph showing capacity retention of the all solid batteries according to Examples 1 and 2 and Comparative Example 1.

### DETAILED DESCRIPTION OF THE INVENTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention as defined in the appended claims.

The drawings and description are to be regarded as illustrative in nature and not restrictive. Like reference numerals designate like elements throughout the specification.

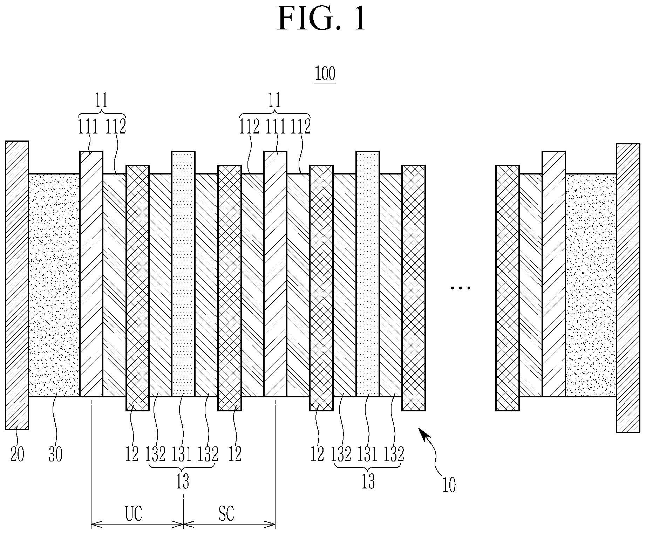

FIG. 1 is a cross-sectional view of the all solid battery according one embodiment. Referring to FIG. 1, the all solid battery 100 according to one embodiment includes a cell stack 10, a case 20, and a buffer material layer 30.

The cell stack 10 includes a negative electrode 11, a solid electrolyte layer 12, and a positive electrode 13. The positive electrode 13, the solid electrolyte layer 12, and the negative electrode 11 form a unit cell (UC) with a stacked structure, and the cell stack 10 may include one or a plurality of unit cells (UC) such that a necessary current amount and voltage may be obtained.

The cell stack 10 may be expanded and shrunken due to expansion and shrinkage in the negative electrode 11 during charging and discharging. The case 20 accommodates the cell stack 10 and the buffer layer 30 is positioned in the case 20 to pressurize the cell stack 10, thereby absorbing the expansion of the cell stack 10. Thus, it allows close contact of the negative electrode 11, the solid electrolyte layer 12, and the positive electrode 13.

The buffer material layer 30 includes a thermo-responsive polymer porous sheet of which volume is shrunken at a critical temperature or more, and is expanded when the temperature is reduced.

The buffer material included in the buffer material layer 30, i.e. the thermo-responsive polymer is a thermo-responsive polymer having a critical temperature of about 50 °C to about 80 °C. If a polymer having a critical temperature of more than 80°C is used as the thermo-responsive polymer, it is not desired because cell deterioration may occur.

Such a thermo-responsive polymer are polymers of which volume is reduced at a critical temperature, and are poly(N-ethylmethacrylamide), poly(propylene glycol), poly(N-cyclopropylacrylamide), or combination thereof.

When the thermo-responsive polymer having a critical temperature of about 50 °C to about 80 °C is used as the buffer material included in the buffer material layer, the total thickness of the assembly of the cell stack and the buffer material layer is largely maintained compared to the battery case at room temperature, and before inserting it into the battery case, when the assembly is heated at a critical temperature or more, the total thickness of the cell stack and the buffer material layer is reduced. Thus, the inserting into the battery case is performed at a critical temperature or more to allow easy insertion of the assembly into the battery case.

Furthermore, when the all solid battery is charged, an inner temperature of the battery is reduced to equal to or less than the critical temperature, and thus, the volume of the assembly may be restored to be enlarged, but it does not increase to more than the thickness of the battery case. Thus, the pressurization of the cell stack occurs, so that the contact between the positive electrode, the solid electrolyte layer, and the negative electrode may be improved. As a result, the charging and the discharging of the battery may further readily occur.

If a thermo-responsive polymer having a critical temperature out of the range, that is, the polymer having a critical temperature of less than 50 °C is used, a volume of an assembly is not increased at an operation temperature of the all solid battery of 25 °C to 45 °C, and thus, pressurization cannot be suitably applied to the stack. If the polymer has a critical temperature of more than 80 °C, a heat-treatment for reducing the volume of the assembly is performed at extremely high temperatures, which cause deterioration of the physical properties, especially, of the solid electrolyte layer.

The all solid battery may undergo expansion and shrinkage of the negative electrode during the charging and the discharging, and thus, it generally includes a buffer material absorbing changes in volume. Furthermore, the thickness of the assembly including the buffer material and the cell stack is to be larger than that of the battery case so that the buffer material may be pressurized to improve the contact state between the active material layer and the solid electrolyte. However, in this case, the larger thickness of the assembly than the battery case causes damage to the assembly during the insertion, making it difficult to insert.

As the all solid battery according to one embodiment includes a thermo-responsive polymer as the buffer material, the thickness of the assembly may be reduced to the similar to that of the battery case during insertion, and after insertion, the thickness of the battery may be increased during charging and discharging. Such an increase in the battery thickness occurs inside of the battery case which causes pressurization, that is, to pressurize it.

In the all solid battery according to one embodiment, the thickness of the buffer material layer may be about 10 µm to about 300 µm. When the thickness of the buffer material layer is within the above range, the appropriate pressurization may be maintained which occurs during stable charging and discharging operation of the cell. The thickness of the buffer material layer may be surely and appropriately controlled according to the designed capacity of the positive electrode.

The buffer material layer may be obtained by adding the thermo-responsive polymer to a solvent to prepare a liquid including the buffer material, casting the liquid on a release film, drying to prepare a buffer material layer, and separating the buffer material layer from the film. The solvent may be propanol, butanol, ethanol, or a combination thereof. The release film may be a polytetrafluoroethylene film, a polyester film, a silicon release film, or a combination thereof.

In the cell stack 10, the negative electrode 11 may include a negative active material layer 112 on one side or both sides of the negative current collector 111. The negative current collector 111 may be indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be a foil-type or sheet-type.

The negative active material layer 112 may include a negative active material, and the negative active material may be a carbon-based material and metal particles. The carbon-based material may be amorphous carbon, and the amorphous carbon may be carbon black, acetylene black, denka black, ketjen black, furnace black, activated carbon, or a combination thereof. The carbon black may be Super P (available from Timcal Co., Ltd.).

The amorphous carbon may have secondary particles in which a plurality of primary particles are agglomerated. Herein, a particle diameter of the primary particles may be about 20 nm to about 100 nm, and a particle diameter of the secondary particles may be about 50 nm to about 1 µm.

In one embodiment, the particle diameter of the primary particles may be about 20 nm or more, about 30 nm or more, about 40 nm or more, about 50 nm or more, about 60 nm or more, about 70 nm or more, about 80 nm or more, or about 90 nm or more, and about 100 nm or less, about 90 nm or less, about 80 nm or less, about 70 nm or less, about 60 nm or less, about 50 nm or less, about 40 nm or less, or about 30 nm or less.

In one embodiment, the particle diameter of the secondary particles may be about 50 nm or more, about 60 nm or more, about 70 nm or more, about 80 nm or more, about 100 nm or more, or about 200 nm or more, and about 1 µm or less, about 900 nm or less, about 800 nm or less, about 700 nm or less, about 600 nm or less, or about 500 nm or less.

The shape of the primary particles may be a spherical shape, an oval shape, a plate shape, or a combination thereof.

The metal particles may be Ag, Zn, Al, Sn, Mg, Ge, Cu, In, Ni, Bi, Au, Si, Pt, Pd, or a combination thereof, and in one embodiment, may be Ag. When the negative active material layer includes the metal particles, the electrical conductivity of the negative electrode may be improved.

The metal particles may have a size of about 5 nm to about 800 nm. Herein, the size may be an average particle diameter (D50). The size of the metal particle may be about 5 nm or more, about 50 nm or more, about 100 nm or more, about 150 nm or more, about 200 nm or more, about 250 nm or more, about 300 nm or more, about 350 nm or more, about 400 nm or more, about 450 nm or more, about 500 nm or more, about 550 nm or more, about 600 nm or more, about 650 nm or more, about 700 nm or more, or about 750 nm or more. The size of the metal particles may be about 800 nm or less, about 750 nm or less, about 700 nm or less, about 650 nm or less, about 600 nm or less, about 550 nm or less, about 500 nm or less, about 450 nm or less, about 400 nm or less, about 350 nm or less, about 300 nm or less, about 250 nm or less, about 200 nm or less, about 150 nm or less, about 100 nm or less, or about 50 nm or less. When the size of the metal particles satisfies in the above range, the battery characteristic (for example, the cycle-life characteristic) of the all solid battery may be improved.

When the negative active material layer includes the carbon-based material and the metal particles, the mixing ratio of the carbon-based material and the metal particles may be about 1:1 to about 99:1 by weight ratio. For example, the weight of the carbon-based material may be, based on the metal particles, about 1 or more, about 2 or more, about 3 or more, about 4 or more, about 5 or more, about 10 or more, about 15 or more, about 20 or more, about 25 or more, about 30 or more, about 35 or more, about 40 or more, about 45 or more, about 50 or more, about 55 or more, about 60 or more, about 65 or more, about 70 or more, about 75 or more, about 80 or more, about 85 or more, about 90 or more or about 95 or more, and about 99 or less, about 95 or less, about 90 or less, about 85 or less, about 80 or less, about 75 or less, about 70 or less, about 65 or less, about 60 or less, about 55 or less, about 50 or less, about 45 or less, about 40 or less, about 35 or less, about 30 or less, about 25 or less, about 20 or less, about 15 or less, about 10 or less, about 5 or less, about 4 or less, about 3 or less, or about 2 or less. For example, the weight ratio of the carbon-based material and the metal particle may be about 1:1 to about 5:1, about 1:1 to about 10:1, about 1:1 to about 20:1, about 1:1 to about 30:1, about 1:1 to about 40:1, about 1:1 to about 50:1, about 1:1 to about 60:1, about 1:1 to about 70:1, about 1:1 to about 80:1, or about 1:1 to about 90:1. When the carbon-based material and the metal particles may be included at the weight ratio, the electrical conductivity of the negative electrode may be further improved.

The binder may be non-aqueous binder or an aqueous binder.

The non-aqueous binder may be polyvinylidene fluoride, polyvinylchloride, carboxylated polyvinylchloride, polyvinylfluoride, an ethylene oxide-including polymer, polyvinylpyrrolidone, polyurethane, polytetrafluoroethylene, polyethylene, polypropylene, polyamideimide, polyimide, or a combination thereof.

The aqueous binder may be styrene-butadiene rubber (SBR), acrylated styrene-butadiene rubber (ABR), an acrylonitrile-butadiene rubber, an acryl rubber, a butyl rubber, a fluorine rubber, an ethylene oxide-including polymer, polyvinylpyrrolidone, polypropylene, polyepichlorohydrin, polyphosphazene, an ethylene propylene diene copolymer, polyvinylpyridine, chlorosulfonated polyethylene, latex, polyester resin, acryl resin, phenol resin, epoxy resin, polyvinyl alcohol, or a combination thereof.

When the aqueous binder is used as a negative electrode binder, a cellulose-based compound which may impart viscosity may be further used to provide viscosity as a thickener. The cellulose-based compound includes one or more of carboxymethyl cellulose, hydroxypropyl methyl cellulose, methyl cellulose, or alkali metal salts thereof. The alkali metals may be Na, K, or Li. The thickener may be included in an amount of about 0.1 parts by weight to about 3 parts by weight based on 100 parts by weight of the negative active material.

An amount of the binder may be about 1 wt % about 40 wt% based on the total amount, 100 wt% of the negative active material layer. The amount of the binder may be, based on the total amount of 100 wt% of the negative active material layer, about 1 wt% to about 15 wt%, and for example, the binder may be present, based on the total weight of 100 wt% of the negative active material layer, at an amount of about 1 wt% or more, about 2 wt% or more, about 3 wt% or more, about 4 wt% or more, about 5 wt% or more, about 6 wt% or more, about 7 wt% or more, about 8 wt% or more, about 9 wt% or more, about 10 wt% or more, about 11 wt% or more, about 12 wt% or more, about 13 wt% or more, or about 14 wt% or more, and about 15 wt% or less, about 14 wt% or less, about 13 wt% or less, about 12 wt% or less, about 11 wt% or less, about 10 wt% or less, about 9 wt% or less, about 8 wt% or less, about 7 wt% or less, about 6 wt% or less, about 5 wt% or less, about 4 wt% or less, about 3 wt% or less, or about 2 wt% or less,

According to one embodiment, the binder may be present at an amount of about 1 wt% to about 14 wt%, or about 1 wt% to about 10 wt% based on the total weight of 100 wt% of the negative active material layer. In the negative active material layer, the mixing ratio of the negative active material and the binder may be about a 99:1 to about a 60:40 weight ratio, about a 99:1 to about a 85:15 weight ratio, about a 99:1 to about an 86:14 weight ratio, or about a 99:1 to about a 90:10 weight ratio.

In the case of including the binder at the amount of the above range in the negative active material layer, the electrical resistance and the adherence may be improved to increase characteristics of the all solid battery (battery capacity and power characteristic).

The negative active material layer may further include additives, e.g., a conductive material, a filler, a dispersing agent, an ion conductive material, etc., in addition to the negative active material and the binder. The conductive material, which may be included in the negative active material layer, may be, for example, graphite, carbon black, acetylene black, ketjen black, carbon fiber, metal powder, etc. The filler, the dispersing agent, the ion conductive material, etc. which may be included in the negative active material layer, may be materials known in the related art which are generally used in the all solid battery.

The negative active material layer may have a thickness of about 1 µm to about 20 µm. When the thickness of the negative active material layer is within the above range, suitable mechanical strength may be obtained without increases in the irreversible capacity.

The positive electrode 13 may include a positive active material layer 132 on one side or both sides of the positive current collector 131. The positive current collector 131 may be indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be a foil-type or a sheet type.

The positive active material layer may include a positive active material. The positive active material may include compounds that reversibly intercalate and deintercalate lithium ions (lithiated intercalation compounds). For example, it may include one or more composite oxides of a metal selected from cobalt, manganese, nickel, and a combination thereof, and lithium. Specific examples of the positive active material may u be LiₐA_{1-b}B¹_{b}D¹₂ (0.90 ≤ a ≤ 1.8, 0 ≤ b ≤ 0.5); LiₐE_{1-b}B¹_{b}O_{2-c}D¹_{c} (0.90 ≤ a ≤ 1.8, 0 ≤ b ≤ 0.5, 0 ≤ c ≤ 0.5); LiₐE_{2-b}B¹_{b}O_{4-c}D¹_{c} (0.90 ≤ a ≤ 1.8, 0 ≤ b ≤ 0.5, 0 ≤ c ≤ 0.5); LiₐNi_{1-b-c}Co_{b}B¹_{c}D¹_{α} (0.90 ≤ a ≤ 1.8, 0 ≤ b ≤ 0.5, 0 ≤ c ≤ 0.5, 0 < α ≤ 2); LiₐNi_{1-b-c}Co_{b}B¹_{c}O_{2-α}F¹_{α} (0.90 ≤ a ≤ 1.8, 0 ≤ b ≤ 0.5, 0 ≤ c ≤ 0.5, 0 < α < 2); LiₐNi_{1-b-c}Co_{b}B¹_{c}O_{2-α}F¹₂ (0.90 ≤ a ≤ 1.8, 0 ≤ b ≤ 0.5, 0 ≤ c ≤ 0.5, 0 < α < 2); LiₐNi_{1-b-c}Mn_{b}B¹_{c}D¹_{α} (0.90 ≤ a ≤ 1.8, 0 ≤ b ≤ 0.5, 0 ≤ c ≤ 0.5, 0 < α ≤ 2); LiₐNi_{1-b-c}Mn_{b}B¹_{c}O_{2-α}F¹_{α} (0.90 ≤ a ≤ 1.8, 0 ≤ b ≤ 0.5, 0 ≤ c ≤ 0.5, 0 < α < 2); LiₐNi_{1-b-c}Mn_{b}B¹_{c}O_{2-α}F¹₂ (0.90 ≤ a ≤ 1.8, 0 ≤ b ≤ 0.5, 0 ≤ c ≤ 0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ ( 0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMnG_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); QO₂; QS₂; LiQS₂; V₂O₅; LiV₂O₅; Lil¹O₂; LiNiVO₄; Li _{(3-f)}J₂ PO₄₃ (0 ≤ f ≤ 2); Li _{(3-f)}Fe₂ PO₄₃ (0 ≤ f ≤ 2); or LiFePO₄.

In the chemical formulae, A is selected from Ni, Co, Mn, or a combination thereof; B¹ is selected from Al, Ni, Co, Mn, Cr, Fe, Mg, Sr, V, a rare earth element, or a combination thereof; D¹ is selected from O, F, S, P, or a combination thereof; E is selected from Co, Mn, or a combination thereof F¹ is selected from F, S, P, or a combination thereof; G is selected from Al, Cr, Mn, Fe, Mg, La, Ce, Sr, V, or a combination thereof; Q is selected from Ti, Mo, Mn, or a combination thereof; I¹ is selected from Cr, V, Fe, Sc, Y, or a combination thereof; and J is selected from V, Cr, Mn, Co, Ni, Cu, or a combination thereof.

According to one embodiment, the positive active material may be three-component-based lithium transition metal oxide such as LiNiₓCo_{y}Al_{z}O₂ (NCA), LiNiₓCo_{y}Mn_{z}O₂ (NCM) (herein, 0<x<1, 0<y<1, 0<z<1, x+y+z=1), etc.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

Furthermore, the coating layer may be any coating materials which are known as a coating layer for the positive active material of the all solid battery, and e.g., may be Li₂O-ZrO₂ (LZO), etc.

When the positive active material includes a three-component based active material such as NCA or NCM, and includes nickel, the capacity density of the all solid battery may be further improved, and the elution of metal from the positive active material may be further reduced during the charging. Thus, the all solid battery exhibits more improved reliability and cycle-life characteristics in the charge state.

Herein, the shape of the positive active material may be, for example, particle shapes such as a spherical shape and a spherical shape. The average particle diameter of the positive active material may not be specifically limited, and may be in any range which may be applied to a positive active material of the conventional all solid secondary battery. The amount of the positive active material included in the positive active material may not be specifically limited, and may be in any range which may be applied to a positive active material of the conventional all solid secondary battery.

The positive active material layer may further include a solid electrolyte. The solid electrolyte included in the positive active material layer may be the aforementioned solid electrolyte, and may be the same as or different from the solid electrolyte included in the solid electrolyte layer. The solid electrolyte may be included in an amount of about 10 wt% to about 30 wt% based on the total weight of the positive active material layer.

The positive active material layer may further include additives such as a conductive material, a binder, a filler, a dispersing agent, an ion conductive material, etc., in addition to the aforementioned positive active material and the solid electrolyte.

The filler, the dispersing agent, and the ion conductive material which are included in the positive active material layer may be the same as the additive included in the negative active material layer. Herein the conductive material may be about 1 wt% to about 10 wt% with reference to the total of 100 wt% of the positive active material layer.

The binder which may be included in the positive active material may be, for example, a styrene butadiene rubber (SBR), polytetrafluoroethylene, polyvinylidene fluoride, polyethylene, etc.

The thickness of the positive active material layer may be about 100 µm to about 200 µm. For example, the thickness of the positive active material layer may be about 100 µm or more, about 110 µm or more, about 120 µm or more, about 130 µm or more, about 140 µm or more, about 150 µm or more, about 160 µm or more, about 170 µm or more, about 180 µm or more, or about 190 µm or more, and about 200 µm or less, about 190 µm or less, about 180 µm or less, about 170 µm or less, about 160 µm or less, about 150 µm or less, about 140 µm or less, about 130 µm or less, about 120 µm or less, or about 110 µm or less. As described above, the thickness of the positive active material layer is thicker than the thickness of the negative active material layer, and thus the capacity of the positive electrode is larger than the capacity of the negative electrode.

The positive electrode may be prepared by forming a positive active material layer on a positive current collector using a dry-coating or a wet-coating process.

The solid electrolyte layer 12 is interposed between the negative active material layer 112 and the positive active material layer 132. A solid electrolyte included in the solid electrolyte layer may be sulfide-based solid electrolyte, and for example, an argyrodite-type sulfide-based solid electrolyte. The sulfide-based solid electrolyte may be suitable, as it may exhibit better electrochemical characteristics within wider operation temperature ranges and good ionic conductivity compared to other solid electrolytes such as oxide-based solid electrolyte, etc.,

The sulfide-based solid electrolyte may easily form a contact interface with an electrode/electrolyte to exhibit good processability, compared to other solid electrolytes.

In one embodiment, the solid electrolyte may be LiₐM_{b}P_{c}S_{d}Aₑ (where a, b, c, d, and e are each an integer of 0 or more, and 12 or less, M is Ge, Sn, Si, or a combination thereof, and A is one of F, Cl, Br, and I), and more specifically, Li₃PS₄, Li₇P₃S₁₁, or Li₆PS₅Cl.

Such a sulfide-based solid electrolyte may be prepared, for example, by a fusion quenching process or mechanical milling using starting materials, such as Li₂S, P₂S₅, or the like. After the treating, a heat treatment may be performed. The solid electrolyte may be amorphous, crystalline, or a combination thereof.

The sulfide-based solid electrolyte may be a commercial solid electrolyte.

The solid electrolyte layer may further include a binder. The binder may be styrene butadiene rubber, nitrile butadiene rubber, polytetrafluoroethylene, polyvinylidene fluoride, polyethylene, an acrylate-based polymer, or a combination thereof, and may be any material which is generally used in the related art. The acrylate-based polymer may be poly(butyl acrylate), poly(methyl acrylate), poly(ethyl acrylate), poly(styrene-co-acrylic acid), or a combination thereof.

The solid electrolyte layer may be prepared by adding a solid electrolyte to a binder solution, coating it on a substrate film, and drying it. The binder solution may include isobutylyl isobutylate, xylene, octyl acetate, or a combination thereof, as a solvent. An amount of the solid components in the binder solution may be about 0.5 wt% to about 4 wt%. A mixing ratio of the solid electrolyte and the binder may be about 96:4 to 99.5:0.5 by weight ratio. The solid electrolyte layer preparation is widely known in the art, so a detailed description thereof will be omitted in the specification.

The solid electrolyte layer may have a thickness of about 10 µm to about 100 µm. When the thickness of the solid electrolyte layer is within the above range, suitable stiffness and flexibility may be exhibited, without an increase in resistance.

When the all solid battery according to one embodiment is charged, lithium ions are released from a positive active material and pass through the solid electrolyte to move to the negative electrode, and thus, it is deposited to the negative current collector to form a lithium deposition layer. That is, the lithium deposition layer may be formed between the negative current collector and the negative active material layer. As described above, as the repeated charging proceeds, the lithium deposition layer is formed between the negative current collector and the negative active material layer, and when discharging occurs, lithium may be moved back to the positive electrode. Thus, the volume of the negative electrode may be enlarged and reduced, such that the total volume of the battery may be enlarged and reduced.

The charging may be a formation process which may be performed at about 0.1 C to about 0.2 C to about 4.2 V to about 4.5 V once to three times.

The lithium deposition layer may have a thickness of about 10 µm to about 50 µm. For example, the thickness of the lithium deposition layer may be about 10 µm or more, about 20 µm or more, about 30 µm or more, or about 40 µm or more, and about 50 µm or less, about 40 µm less, about 30 µm less, or about 20 µm less.

The buffer material 30 may be interposed between the cell stack 10 and the case 20 and when the cell stack 10 is expanded, the buffer material 30 is compressed to absorb expansion of the cell stack 10, and when the cell stack 10 is shrunken, the buffer material 30 is expanded to pressurize the cell stack 10. Thus, even though the cell stack 10 is shrunken, the cell stack 10 may be pressurized.

That is, the cell stack 10 includes the negative current collector 111, the negative active material layer 112, the solid electrolyte layer 12, the positive active material layer 132, and the positive current collector 131 to form a unit cell (UC), and a symmetric cell (SC) that is symmetric thereto, and may repeatedly include the unit cell and the symmetric cell. Herein, the cell stack 10 includes a positive active material layer 132 on both sides of the positive current collector 131 and the negative active material layer 112 on both sides of the negative current collector 111.

In the first embodiment, the buffer material 30 may be interposed between the inside of the case 20 and a current collector disposed at the outermost of the negative current collector 111 or the positive current collector 131. FIG. 1 shows a negative current collector 111 which is disposed at the outermost.

Herein, the buffer material 30 may be interposed between the negative current collector 111 and an inside of the case 20 facing thereto to absorb a final expansion and a shrinkage of the cell stack 10 due to each expansion and shrinkage of the unit cells (US) in the symmetrical cells (SC).

The buffer material 30 may have a thermo-responsiveness, and thus the thickness of the cell stack 10 is reduced when the cell stack 10 is prepared and heated at a critical temperature or more. Accordingly, it may be easily inserted into the case 20. After the cell stack 10 is inserted into the case 20, as the temperature of the cell stack 10 is decreased to less than the critical temperature, the buffer material 30 may be expanded to maintain the cell stack 10 in the case 20 in the expansion state.

The buffer material 30, that is, a polymer porous, may have a thickness change according to the temperature change to improve workability for inserting the cell stack shrinking and expanding into the case 20. Simultaneously, the buffer material 30 allows continuous pressurization in order to closely contact the negative and positive active material layers 112 and 132, and the solid electrolyte 12, in the cell stack 10 inserted into the case 20.

Hereinafter, the second embodiment will be illustrated. The description of the same components as in the first embodiment will be omitted, and the different constructs thereto will be illustrated.

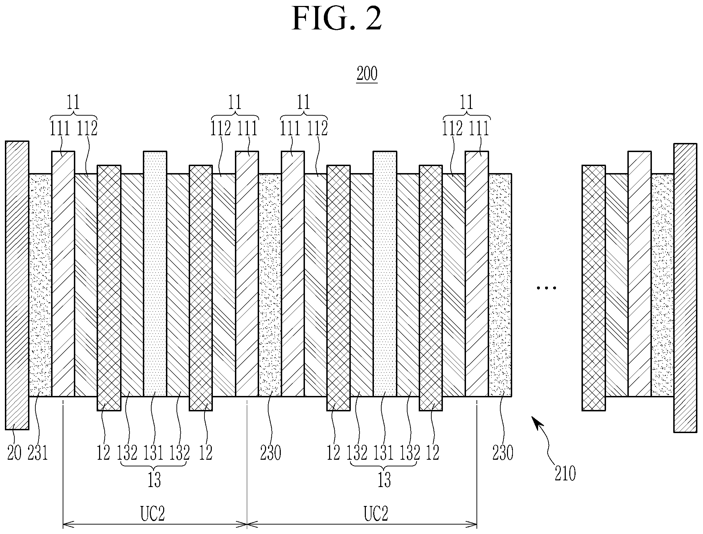

FIG. 2 is a cross-sectional view of the all solid battery according to the second embodiment. Referring to FIG. 2, in the all solid secondary battery according to the second embodiment, a buffer material 230 may be interposed between the opposite sides of the negative active materials 112 forming the two adjacent negative current collectors 111.

That is, the cell stack 210 includes a negative current collector 111, a negative active material layer 112, a solid electrolyte layer 12, a positive active material layer 132, a positive current collector 131, the positive active material layer 132, the solid electrolyte layer 12, the negative active material layer 112 and a negative current collector 111 to form a unit cell (UC2), and may repeatedly include the unit cells (UC2). The cell stack 210 includes a positive active material layer 132 on both sides of the positive current collector 131, and a negative active material 112 on one side of the negative current collector 111.

The buffer material 230 may be interposed between the two adjacent unit cells, UC2, that is, two negative current collectors 111. In this case, the buffer material 230 may absorb partial expansion and shrinkage according to expansion and shrinkage of each of the two unit cells (UC2), respectively. The buffer 231 may be interposed between the inside of the case 20 and the negative current collector 111 disposed at an outermost portion. The buffer material 231 may further finally absorb the remaining expansion and shrinkage in the unit cells (UC2).

Such an all solid battery may be fabricated by laminating the buffer material layer, the negative electrode, the solid electrolyte, and the positive electrode in the structure shown in FIG. 1 or FIG. 2 to prepare an assembly of a cell stack and the buffer material layer, heat-treating the assembly to equal to or more than a critical temperature of the thermo-responsive polymer included in the buffer material layer, i.e., about 50 °C to about 80 °C, inserting the heat-treated product into a battery case, and sealing the battery case. Thereafter, as the prepared all solid battery is maintained at room temperatures, the temperature of the all solid battery may be decreased to a critical temperature of the thermo-responsive polymer or lower.

Changes in volume of the all solid battery during the above process, are described as follows: heat-treatment to the critical temperature of the thermo-response or greater allows a reduction of a total thickness of the assembly to be less than that of the case, and after sealing the battery case and when the temperature of the all solid battery is decreased to the critical temperature of the thermo-responsive polymer or lower (during maintenance or storage at room temperature), the total thickness of the assembly is enlarged (e.g., increased). Herein, as the battery case is sealed, the battery case constrains the expansion of the assembly in the thickness direction, therefore, an inner pressure of the battery may be increased to make compact (e.g., close) contact among the negative electrode, the solid electrolyte, and the positive electrode.

Hereinafter, examples of the present invention and comparative examples are described. These examples, however, are not in any sense to be interpreted as limiting the scope of the invention.

### (Example 1)

### 1. Preparation of positive electrode

100 parts by weight of anhydrous 2-propanol, 10 parts by weight of lithium methoxide (10 % methanol solution), and 0.5 parts by weight of zirconium(IV) tetrapropoxide were mixed to prepare an LZO coating solution. LiNi_{0.9}CO_{0.05}Mn_{0.05}O₂ was admixed to the LZO coating solution and agitated for 1 hour, followed by vacuum-drying at 50 °C to prepare a LZO-coated positive active material.

The LZO-coated positive active material LiNi_{0.9}CO_{0.05}Mn_{0.05}O₂, an argyrodite-type solid electrolyte Li₆PS₅Cl, a carbon nanofiber conductive material, and a polytetrafluoroethylene binder were mixed in an N-methylpyrrolidone solvent to prepare a positive active material slurry. In the positive active material slurry, the weight ratio of the positive active material, the solid electrolyte, the conductive material, and the binder was 85:15:3:1.5.

The positive active material slurry was coated on an aluminum foil, and dried and compressed in a general method to prepare a positive electrode having a thickness of 120 µm in which a positive active material had a thickness of 105 µm.

### (2) Preparation of solid electrolyte layer

To an argyrodite-type solid electrolyte Li₆PS₅Cl, an isobutylyl isobutyrate binder solution (solid amount: 8 wt%) added with poly(butyl acrylate) was added and mixed therewith. The mixing ratio of the solid electrolyte and the binder was to be 99:1 by weight ratio.

The mixing was performed by using a Thinky mixer. The obtained mixture was added with 2 mm zirconia balls and was repeatedly mixed with the Thinky mixer to prepare a slurry. The slurry was casted on a release polytetrafluoroethylene film and dried at room temperature to prepare a solid electrolyte layer with a thickness of 100 µm.

### (3) Preparation of negative electrode

Polyvinylidene fluoride was dissolved in an N-methyl pyrrolidone solvent to prepare a binder solution with a solid amount of 7 wt%.

The binder solution, Ag nanoparticles (D50: 60 nm) and carbon black were mixed. The carbon black was used as secondary particles having a particle diameter of 275 nm in which primary particles having a particle diameter of 76 nm were assembled. Herein, the mixing ratio of carbon black and Ag nanoparticles was 75:25 by weight ratio, and the mixing ratio of a mixture of Ag nanoparticles and carbon black, and polyvinylidene fluoride, was 93:7 by weight ratio.

The mixture was agitated with the Thinky mixer to suitably control viscosity. After controlling viscosity, 2 mm zirconia balls were added thereto and it was again agitated to prepare a slurry. The agitated slurry was coated on a stainless steel foil current collector and vacuum dried at 100 °C to prepare a negative electrode having a negative active material layer with a thickness of 10 µm and the current collector. The negative electrode had a thickness of 20 µm and the amount of the binder in the negative active material layer was 7 wt% based on the total amount, 100 wt% of the negative active material layer.

### (4) Preparation of buffer material layer

Poly(N-ethylmethacrylamide) with a critical temperature of 58°C was added to a propanol solvent to prepare a buffer solution, cast on a release polytetrafluoroethylene film, and then dried on room temperature to a buffer material layer with a thickness of 200 µm.

### (4) Preparation of all solid battery

The prepared buffer material layer, the negative electrode, the solid electrolyte and the positive electrode were stacked in the structure shown in FIG. 1 to prepare an assembly of a cell stack and a buffer material layer. The assembly was heat-treated at 60 °C, and the heat-treated product was inserted into a battery case to fabricate an all solid cell.

### (Example 2)

The prepared buffer material layer, the negative electrode, the solid electrolyte, and the positive electrode were stacked in the structure shown in FIG. 2 to prepare an assembly of a cell stack and a buffer material layer. The assembly was heat-treated at 60 °C, and the heat-treated product was inserted into a battery case to fabricate an all solid cell.

### (Comparative Example 1)

An all solid cell was fabricated by the same procedure as in Example 1, except that a polytetrafluoroethylene film was used as the buffer material layer.

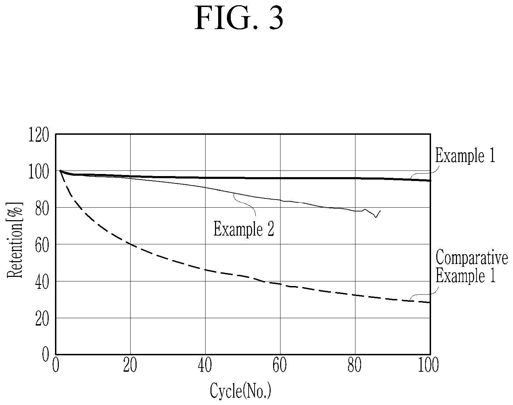

The all solid cells according Examples 1 and 2 and Comparative Example 1 were charged and discharged at a condition of 0.33 C, an upper-voltage of 4.25 V, and a lower-voltage of 2.5 V, 100 times. The ratio of the 100^{th} discharge capacity to the 1^{st} discharge capacity was measured, and the result is shown in FIG. 3 as a capacity retention ratio. As shown in FIG. 3, the capacity retention of the all solid cells according to Examples 1 and 2 exhibited was substantially better than that according to Comparative Example 1.

**<Description of symbols>**

| | | | |
|---|---|---|---|
| 10, 210: | Cell stack | 11: | Negative electrode |
| 12: | Solid electrolyte layer | 13: | Positive electrode |
| 20: | Case | 30, 230, 231: | Buffer material |
| 100, 200: | All solid secondary battery | 111: | Negative current collector |
| 112: | Negative active material layer | 132: | Positive active material layer |
| 131: | Positive current collector | SC: | Symmetric cell |
| UC, UC2: | Unit cell | | |

## Claims

1. An all solid battery (100, 200), comprising:
a cell stack (10, 210) comprising a negative electrode (11), a solid electrolyte layer (12), and a positive electrode (13);
a case (20) accommodating the cell stack (10, 210); and
a buffer material layer (30, 230, 231) pressurizing the cell stack (10, 210) in the case (20), wherein the buffer material layer (30, 230, 231) is a thermo-responsive polymer porous sheet, which volume is shrunken at a critical temperature or more and expanded when the temperature is reduced, wherein the buffer material layer (30, 230, 231) is a thermo-responsive polymer having a critical temperature of 50 °C to 80 °C, and wherein the thermo-responsive polymer is selected from poly(N-ethylmethacrylamide), poly(propylene glycol), poly(N-cyclopropylacrylamide), or a combination thereof.

2. The all solid battery of claim 1, wherein the buffer material layer (30, 230, 231) is interposed between the cell stack (10, 210) and the case (20).

3. The all solid battery of claim 2, wherein the negative electrode (11) comprises a negative current collector (111) and a negative active material layer (112) formed on one side or both sides of the negative current collector (111),
the positive electrode (13) comprises a positive current collector (131) and a positive active material layer (132) formed on one side or both sides of the positive current collector (131),
the solid electrolyte layer (12) is interposed between the negative active material layer (112) and the positive active material layer (132), and
the buffer material layer (30, 230, 231) is interposed between an outermost current collector of the negative current collector (111) or the positive current collector (131), and the inside of the case (20).

4. The all solid battery of one of claims 1 and 2, wherein the negative electrode (11) comprises a negative current collector (111) and a negative active material layer (112) formed on one side of the negative current collector (111),
the positive electrode (13) comprises a positive current collector (131) and a positive active material layer (132) formed on both sides of the positive current collector (131),
the solid electrolyte layer (12) is interposed between the negative active material layer (112) and the positive active material layer (132), and
the buffer material layer (30, 230, 231) is interposed between opposite sides of the negative active material layer (112) of the two adjacent negative current collectors (111).

5. The all solid battery of claim 4, wherein the buffer material layer (30, 230, 231) is interposed between the negative current collector (111) disposed at an outermost position and the inside of the case (20).

## Patentansprüche

1. Festkörperbatterie (100, 200), umfassend:
einen Zellstapel (10, 210), der eine negative Elektrode (11), eine Festkörperelektrolytschicht (12) und eine positive Elektrode (13) umfasst;
ein Gehäuse (20), das den Zellstapel (10, 210) aufnimmt; und
eine Puffermaterialschicht (30, 230, 231), die den Zellstapel (10, 210) in dem Gehäuse (20) unter Druck setzt, wobei die Puffermaterialschicht (30, 230, 231) eine poröse Lage aus thermoresponsivem Polymer ist, deren Volumen bei einer kritischen Temperatur oder mehr schrumpft und sich ausdehnt, wenn die Temperatur reduziert wird, wobei die Puffermaterialschicht (30, 230, 231) ein thermoresponsives Polymer mit einer kritischen Temperatur von 50 °C bis 80 °C ist und wobei das thermoresponsive Polymer ausgewählt ist aus Poly(N-ethylmethacrylamid), Poly(propylenglycol), Poly(N-cyclopropylacrylamid) oder einer Kombination davon.

2. Festkörperbatterie nach Anspruch 1, wobei die Puffermaterialschicht (30, 230, 231) zwischen dem Zellstapel (10, 210) und dem Gehäuse (20) angeordnet ist.

3. Festkörperbatterie nach Anspruch 2, wobei die negative Elektrode (11) einen negativen Stromkollektor (111) und eine negative Aktivmaterialschicht (112) umfasst, die auf einer Seite oder beiden Seiten des negativen Stromkollektors (111) ausgebildet ist,
die positive Elektrode (13) einen positiven Stromkollektor (131) und eine positive Aktivmaterialschicht (132) umfasst, die auf einer Seite oder beiden Seiten des positiven Stromkollektors (131) ausgebildet ist,
die Festkörperelektrolytschicht (12) zwischen der negativen Aktivmaterialschicht (112) und der positiven Aktivmaterialschicht (132) angeordnet ist, und
die Puffermaterialschicht (30, 230, 231) zwischen einem äußersten Stromkollektor des negativen Stromkollektors (111) oder des positiven Stromkollektors (131) und der Innenseite des Gehäuses (20) angeordnet ist.

4. Festkörperbatterie nach einem der Ansprüche 1 und 2, wobei die negative Elektrode (11) einen negativen Stromkollektor (111) und eine negative Aktivmaterialschicht (112) umfasst, die auf einer Seite des negativen Stromkollektors (111) ausgebildet ist,
die positive Elektrode (13) einen positiven Stromkollektor (131) und eine positive Aktivmaterialschicht (132) umfasst, die auf beiden Seiten des positiven Stromkollektors (131) ausgebildet ist,
die Festkörperelektrolytschicht (12) zwischen der negativen Aktivmaterialschicht (112) und der positiven Aktivmaterialschicht (132) angeordnet ist, und
die Puffermaterialschicht (30, 230, 231) zwischen gegenüberliegenden Seiten der negativen Aktivmaterialschicht (112) der beiden benachbarten negativen Stromkollektoren (111) angeordnet ist.

5. Festkörperbatterie nach Anspruch 4, wobei die Puffermaterialschicht (30, 230, 231) zwischen dem negativen Stromkollektor (111), der an einer äußersten Position angeordnet ist, und der Innenseite des Gehäuses (20) angeordnet ist.

## Revendications

1. Batterie tout solide (100, 200), comprenant :
un empilement de cellules (10, 210) comprenant une électrode négative (11), une couche d'électrolyte solide (12) et une électrode positive (13) ;
un boîtier (20) logeant l'empilement de cellules (10, 210) ; et
une couche de matériau tampon (30, 230, 231) mettant l'empilement de cellules (10, 210) sous pression dans le boîtier (20), dans laquelle la couche de matériau tampon (30, 230, 231) est une feuille poreuse de polymère thermosensible dont le volume diminue à une température critique ou plus et augmente lorsque la température est réduite, dans laquelle la couche de matériau tampon (30, 230, 231) est un polymère thermosensible présentant une température critique de 50 °C à 80 °C, et dans laquelle le polymère thermosensible est choisi parmi poly(N-éthylméthacrylamide), poly(propylène glycol), poly(N-cyclopropylacrylamide) ou une combinaison de ceux-ci.

2. Batterie tout solide selon la revendication 1, dans laquelle la couche de matériau tampon (30, 230, 231) est interposée entre l'empilement de cellules (10, 210) et le boîtier (20).

3. Batterie tout solide selon la revendication 2, dans laquelle l'électrode négative (11) comprend un collecteur de courant négatif (111) et une couche de matériau actif négatif (112) formée sur un côté ou sur les deux côtés du collecteur de courant négatif (111),
l'électrode positive (13) comprend un collecteur de courant positif (131) et une couche de matériau actif positif (132) formée sur un côté ou sur les deux côtés du collecteur de courant positif (131),
la couche d'électrolyte solide (12) est interposée entre la couche de matériau actif négatif (112) et la couche de matériau actif positif (132), et
la couche de matériau tampon (30, 230, 231) est interposée entre un collecteur de courant le plus extérieur du collecteur de courant négatif (111) ou du collecteur de courant positif (131) et l'intérieur du boîtier (20).

4. Batterie tout solide selon l'une des revendications 1 et 2, dans laquelle l'électrode négative (11) comprend un collecteur de courant négatif (111) et une couche de matériau actif négatif (112) formée sur un côté du collecteur de courant négatif (111),
l'électrode positive (13) comprend un collecteur de courant positif (131) et une couche de matériau actif positif (132) formée sur les deux côtés du collecteur de courant positif (131),
la couche d'électrolyte solide (12) est interposée entre la couche de matériau actif négatif (112) et la couche de matériau actif positif (132), et
la couche de matériau tampon (30, 230, 231) est interposée entre des côtés opposés de la couche de matériau actif négatif (112) des deux collecteurs de courant négatif (111) adjacents.

5. Batterie tout solide selon la revendication 4, dans laquelle la couche de matériau tampon (30, 230, 231) est interposée entre le collecteur de courant négatif (111) disposé à une position la plus extérieure et l'intérieur du boîtier (20).
